# EUROPEAN PATENT SPECIFICATION

(11) **EP 1 171 998 B1**
(45) Date of publication and mention of the grant of the patent: **17.09.2003**
(21) Application number: 00926211.4
(22) Date of filing: 20.04.2000
(51) Int. Cl.: H04N 5/46, H04N 5/44

(54) **IF SIGNAL PROCESSING APPARATUS**
ZWISCHENFREQUENZSIGNALVERARBEITUNGSGERÄT
APPAREIL DE TRAITEMENT DE SIGNAUX FI

(30) Priority: 20.04.1999 US 130167 P
(43) Date of publication of application: 16.01.2002
(73) Proprietor: Thomson Licensing S.A., 92648 Boulogne Cedex (FR)
(72) Inventor: GRUBBS, Gary, Dean, Indianapolis, IN 46234-7023 (US); HARO, Ricardo, Indianapolis, IN 46250-3053 (US); DIEMER, Rodger, Anthony, Indianapolis, IN 46220-2318 (US); HUTCHINSON, Daniel, Mark, Carmel, IN 46032-5257 (US)
(74) Representative: Rossmanith, Manfred, Dr.
(86) International application number: US0010724
(87) International publication number: WO00064151

(56) References cited:
- EP-A- 0 808 060
- US-A- 5 283 653

## Description

This application relates to intermediate frequency (IF) signal processing.

### BACKGROUND INFORMATION

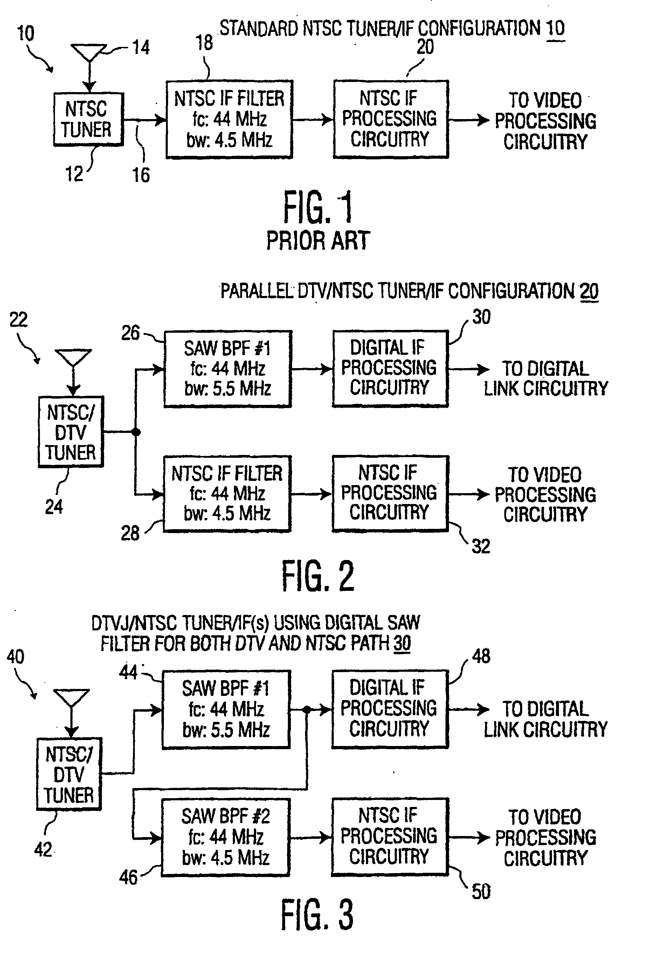

FIGURE 1 is exemplary of a known tuner and IF signal processing apparatus indicated generally by the reference numeral 10. This tuner and IF signal processing apparatus 10 is for use with analog signals of a given broadcast standard, such as NTSC, PAL, and SECAM. This application describes NTSC application of the invention as an exemplary embodiment.

The Tuner/IF system 10 comprises a tuner 12 (with RF input 14 and IF output 16), IF filter(s) 18, and IF signal processor 20. The tuner's IF output 16 is at the standard frequency (e.g., desired channel spectrum centered at 44 MHz, picture carrier at 45.75 MHz, and sound carrier at 41.25 MHz). The IF filter(s) 18, which usually consist of one SAW (surface acoustic wave) filter for inter-carrier IF systems or two SAWF for parallel picture and sound IF systems, pass the desired channel and reject all others. In the parallel system one SAW filter passes the desired sound signal only, and the other passes the desired picture signal only. In either case, the filter characteristics include a "Nyquist Slope" through the double-side-band region of the picture IF spectrum. The filtered signal is applied to a conventional IF processing circuit 20 which performs such general functions as demodulation, AGC generation and the like and provides a processed baseband video output signal to a video processing circuit. The video processing circuit performs conventional functions such as color demodulation and other functions such as brightness, hue and tint control and the like.

With the advent of digital television (DTV), and specifically digital terrestrial television such as HDTV (high definition television), television receivers and their corresponding tuner/IF systems which provide proper tuning and filtering required for processing both NTSC and DTV signals are needed.

FIGURE 2 illustrates a modification of the NTSC only system of FIGURE 1 to provide a tuner/IF system 22 able to be used for both NTSC and DTV reception. In FIGURE 2, a tuner 24 is modified to provide reception of both NTSC and DTV signals. Conversion signals are appropriately selected such that both types of signals produce a common IF signal frequency (e.g., about 44 MHz). Two SAW filters 26 and 28 are coupled in parallel with the output of the NTSC/DTV tuner. SAW BPF #1 26 has specific requirements for DTV signal reception and processing while SAW BPF #2 28 has specific requirements for NTSC signal reception and processing. For example, both SAW BPF #1 26 and SAW BPF #2 28 have a center frequency of about 44 MHz. However, SAW BPF #1 has a flat passband response, while SAW BPF #2 has the characteristics described above for the IF Filter(s) 18 in figure 1. The DTV filtered signal is applied to Digital IF processing circuitry 30. The digital IF processing circuitry 30 provides the filtered and processed DTV signal to Digital Link (i.e., decoder) circuitry (not shown). The NTSC filtered signal is applied to NTSC IF processing circuitry 32. The NTSC IF processing circuitry 32 provides the filtered and processed NTSC signal to video processing circuitry (not shown).

Due to passband flatness requirements for DTV signals, the DTV/NTSC tuner 24 in FIGURE 2 has a wider bandwidth than the NTSC tuner 12 in FIGURE 1. Consequently, the NTSC adjacent channel rejection of system 22 in FIGURE 2 is not as good as system 10 in FIGURE 1.

In EP-A-0 808 060 an IF signal processing circuit for analog and digital television signals is disclosed, in which an IF signal passes a first SAW filter and then a second SAW filter. An integrated circuit comprises inputs for digital IF signals, which are coupled to the output of the first SAW filter, and inputs for processing analog IF signals, which inputs are coupled to the output of the second SAW filter. The integrated circuit comprises further a switch for switching between the digital and the analog inputs in dependence on the content of the IF signal. In US 5,283,653 a dual HDTV/NTSC receiver is disclosed, which comprises an NTSC signal processing section and a HDTV signal processing section being coupled in parallel to the IF output of a tuner.

### SUMMARY

An If signal processing arrangement for processing both analog and digital signals is disclosed in the present application. The signal processing arrangement includes a signal source for providing one of digital and analog IF signals, a first SAW filter having an output for filtering the IF signal, digital signal processing circuitry coupled to the output for processing a filtered digital IF signal, and analog signal processing circuitry coupled to the output for processing which includes filtering a filtered analog signal.

### BRIEF DESCRIPTION OF THE DRAWINGS

The invention is illustrated in the accompanying drawings, wherein:
FIGURE 1 (Prior Art) is a block diagram of a conventional NTSC Tuner/IF configuration for processing NTSC television signals;
FIGURE 2 is a block diagram of a parallel DTV/NTSC Tuner/IF configuration for tuning both DTV and NTSC signals;
FIGURE 3 is a simplified block diagram of a dual DTV/NTSC Tuner/IF apparatus embodying the features of the present invention;
FIGURE 4 is a detailed block diagram illustrating a practical implementation and additional features of the embodiment of FIGURE 3;
FIGURE 5 is a tuner frequency response diagram comparing the response of a conventional NTSC only tuner with that of the embodiments of FIGURES 3 and 4;
FIGURE 6 is a tuner frequency response diagram comparing the selectivity of a conventional NTSC only receiver to that of the embodiments of FIGURES 3 and 4 of the present invention; and
FIGURE 7 is a tuner frequency response diagram illustrating certain aspects of sound intermediate frequency (SIF) processing for the embodiment of FIGURE 4.

### DETAILED DESCRIPTION OF THE PREFERRED EMBODIMENT

The present invention recognizes that passing the NTSC signal through SAW BPF #1 (i.e., connecting the input of SAW BPF #2 to the output of SAW BPF #1 instead of the tuner output) provides dramatically better adjacent channel and spurious signal rejection than system 10 in FIGURE 1. This change is illustrated in FIGURE 3. These benefits are significant as NTSC adjacent channel rejection (1st adjacent, 2nd adjacent, etc.) is a parameter that becomes significantly more important during the HDTV transition period in which VHF and UHF "taboos" (i.e., restrictions) on adjacent channel frequency allocations may be discarded or significantly reduced to make more spectral room available for the new HDTV terrestrial transmission channels while still accommodating current NTSC terrestrial channel allocations.

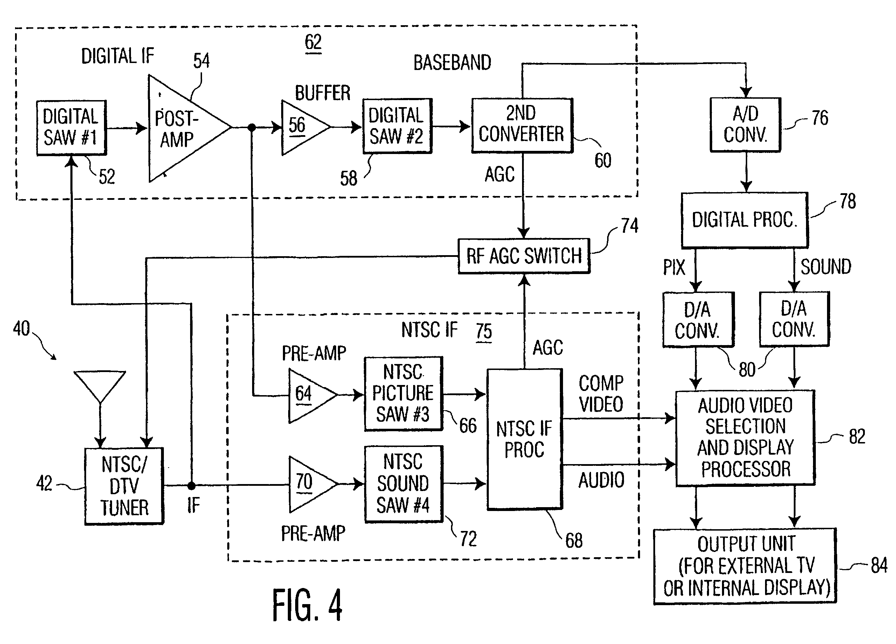

A simplified diagram of the NTSC/DTV tuner/IF signal processor of the present invention is illustrated in FIGURE 3 and indicated generally by the reference numeral 40. A more detailed diagram illustrating further features of the tuner/IF signal processor 40 of the present invention is shown in FIGURE 4. FIGURES 3 and 4 show that the input to the NTSC SAW filter is taken from the output of a DTV SAW filter. Thus, the received NTSC signal is "double filtered".

Advantageously, the configurations of FIGURES 3 and 4 provide significant improvement in NTSC adjacent channel rejection and rejection of other out-of-band undesired signals as compared with the examples of FIGURES 1 and 2.

In FIGURE 3, the NTSC/DTV tuner/IF signal processor 40 is provided with conversion frequencies which result in a common IF output signal frequency (e.g., 44 MHz) for both NTSC and DTV reception modes. The NTSC/DTV tuner/IF signal processor 40 includes a single conversion tuner 42 able to receive both NTSC and DTV signals. The tuner 42 provides received NTSC and DTV signals to a first SAW filter 44. The output of the first SAW filter 44 is provided to both a second SAW filter 46 and digital IF processing circuitry 48. The digital IF processing circuitry 48 receives the filtered signal from the first SAW filter 44 and provides a near baseband output signal to digital "link" or decoder circuitry (see Figure 4).

When an NTSC signal is received, the received signal is provided to the first SAW filter 44. The first SAW filter 44 filters the received NTSC signal and provides the filtered signal to the second SAW filter 46. The IF signal thus passes through both filters for application to the NTSC IF processing circuitry 50 thereby reducing the undesirable effects of adjacent channel interference discussed above.

FIGURE 4 is a practical implementation of figure 3, and includes more details. With the current state-of-the-art technology, the filter characteristics required for the DTV IF signal cannot be achieved with a single SAW filter as depicted by SAW BPF #1 44 in figure 3. That is, the selectivity requirements cannot be met without excessive insertion loss. The excessive insertion loss would ultimately result in inferior system noise figure or severe linearity requirement for a preamplifier. In practice, the required filter and performance characteristics are achieved by cascading two identical SAW filters, Digital SAW #1 and Digital SAW #2, with inter-stage amplifiers Post-amp 54 and Pre-amp 56 as shown in figure 4. Thus, when a DTV signal is selected by the NTSC/DTV tuner 42, it is processed through the cascaded circuits comprised of Digital SAW #1, Post-amp 54, Pre-amp 56, and Digital SAW #2 58, to input of a 2^{nd} converter circuit 60.

The Post-amp 54 provides an optimum load impedance for Digital SAW #1 44 and compensates for its loss. Similarly, the Pre-amp 56 provides an optimum source impedance for Digital SAW #2 58 and compensates for its loss. The output of the 2^{nd} converter circuit 60 is converted from an analog signal to a digital signal by the A/D Converter 76, the digital processor 78 demodulates the digital signal and separates the picture and sound signals, and the signals are converted back to analog format by a pair of digital-to-analog converters 80.

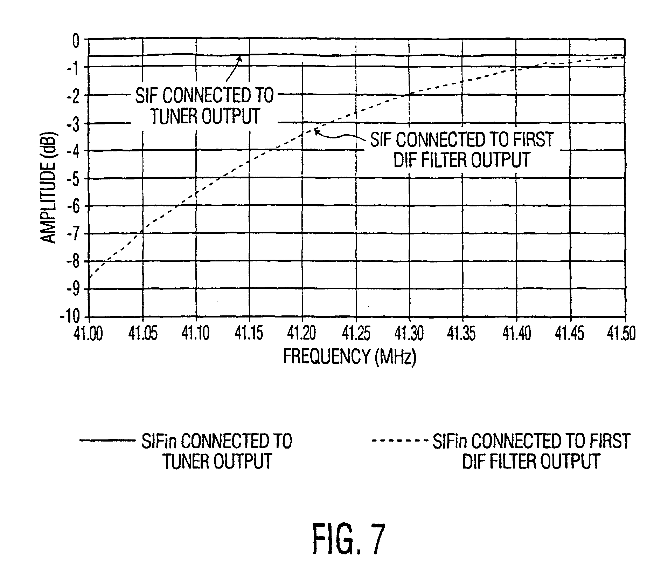

When an NTSC signal is selected by the NTSC/DTV tuner 42, there are separate paths for the picture and sound signals. The picture signal is processed through Digital SAW #1 44 and Post-amp 54 before being processed through the Pre-amp 64 and conventional NTSC Picture SAW #3 66 to the NTSC processor 68. Since the sound carrier frequency is at the band-edge of Digital SAW #1 44 and the sloped frequency response through the sound channel will have undesirable effects (see figure 7), the sound signal does not pass through Digital SAW #1 and Post-amp 54. Instead the sound signal is processed through Pre-amp 70 and NTSC Sound SAW #4 72 to the NTSC IF processor 68. The Pre-amp 64 provides an optimum source impedance for NTSC Picture SAW #3 66 and compensates for its loss.

Similarly, the Pre-amp 70 provides the optimum source impedance for NTSC Sound SAW #4 and compensates for its loss. Processing the picture signal through Digital SAW #1 44 and Post-amp 54 provides the advantage of better selectivity (e.g., adjacent channel rejection and spurious signal immunity). The NTSC IF processor demodulates the picture and sound signals and provides composite video and audio baseband outputs.

Both the Digital IF 2^{nd} Converter 60 and NTSC IF Processor generate RF AGC control signals that are applied to a RF AGC Switch 74. The output of the RF AGC Switch 74 controls the gain of the NTSC/DTV tuner 42. Similarly, the NTSC IF processor 68 and D/A converter 80 picture and sound signals are applied to an Audio-Video Selection and Display Processor 82 whose output drives an internal or external display unit 84. When the system is installed in a new location, an automatic setup procedure determines which type of signal (NTSC or DTV) is present on each channel and stores the results in memory (not shown). Then whenever a new channel is selected, the system microprocessor (not shown) uses the data stored in memory to properly set the RF AGC switch 74 and the Audio-Video Selection Switch 82.

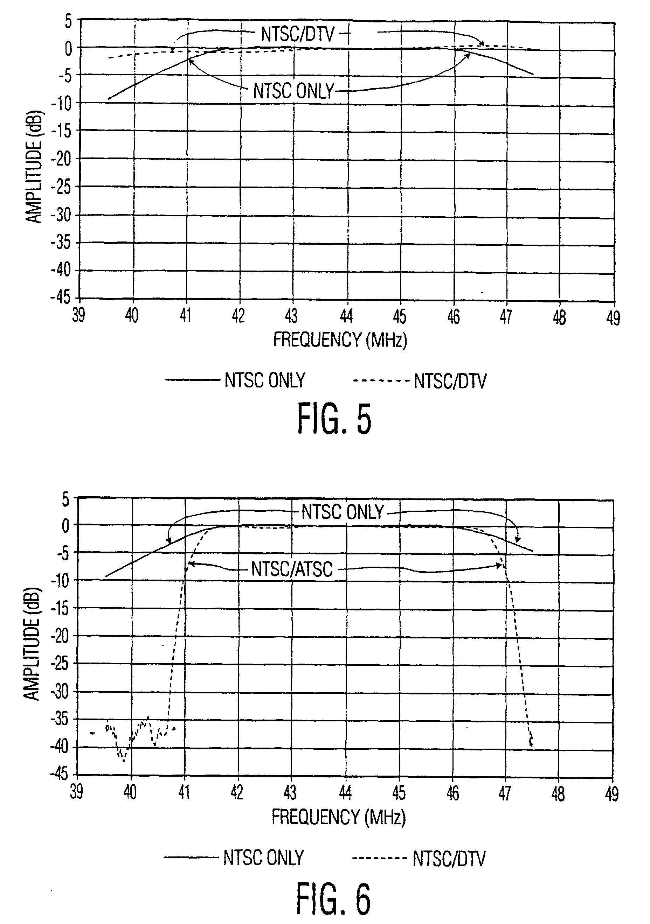

FIGURE 5 compares the frequency response of the NTSC only tuner 12 (figure 1) and the NTSC/DTV tuner 42 (figure 4) of the present invention. The wider bandwidth (i.e., poorer selectivity) of the NTSC/DTV tuner is a negative consequence of being able to maintain the passband flatness requirements for DTV signals.

FIGURE 6 compares the frequency response of the NTSC only tuner 12 (figure 1) to the frequency response through the NTSC/DTV tuner 42, Digital SAW #1 44, and Post-amp 54 (figure 4). Since the frequency response of the subsequent circuits is the same for both systems, this illustrates the huge advantage in passing the NTSC picture IF signal through Digital SAW #1 44 and Post-amp 54 instead of directly to the input of the Pre-amp 64 in the NTSC IF 50. Doing so more than compensates for the relatively poor selectivity of the NTSC/DTV tuner 42. The selectivity of the present invention, as seen in FIGURE 6, is indicative of excellent adjacent channel rejection and spurious signal immunity.

It will be noted that the embodiment of FIGURE 4 has two SAW filters in the DTV signal path, and the NTSC picture signal is only passed through the first of these two SAW filters. This is the preferred configuration because it achieves the selectivity requirements with negligible degradation to system noise figure. That is passing the NTSC picture signal through both SAW filters in the DTV signal path is not necessary from a selectivity standpoint, and the additional degradation in system noise figure may be significant.

FIGURE 7 is a graph illustrating the effects of passing the NTSC sound IF signal through the first SAW filter 44 as opposed to bypassing the first SAW filter 44. The results obtained by passing the NTSC sound signal through the first SAW filter 44 differ drastically from the results obtained by bypassing the first SAW filter 44. As can be seen from this figure, when the sound IF signal is provided from the single conversion tuner 42 directly to the NTSC sound SAW filter 72, the frequency response through the sound channel is constant. Such is not the case for passing the NTSC sound IF signal through the first filter 44. It is thus beneficial for the NTSC sound IF signal to bypass the first SAW filter 44.

Although the present invention has been described with a certain degree of particularity, it is understood that the present disclosure has been made by way of examples and that changes in details of arrangement may be made without departing from the spirit the invention. For example, the analog television signals may include PAL and SECAM television signals, and the digital television (DTV) signals may include QAM and digital VSB television signals. In addition, the DTV signal processing after Digital SAW #2 might utilize another approach (e.g., A/D conversion and digital demodulation immediately after Digital SAW #2).

## Claims

1. Signal processing arrangement comprising:
a signal source (42) for providing one of digital and analog IF signals;
a first SAW filter (52) coupled to said signal source (42) and having an output for filtering said IF signals;
digital signal processing means (58, 60, 76, 78) coupled to said output for processing a filtered digital IF signal; **characterized by**
first analog signal processing means (64, 66, 68) coupled to said output for processing only the picture component of an analog IF signal, and
second analog signal processing means (70, 72, 68) coupled to said signal source (42) for processing only the sound component of an analog IF signal, bypassing therefore the first SAW filter (52).

2. Signal processing arrangement according to Claim 1, wherein said digital signal processing means (58, 60, 76, 78) includes a second SAW filter (58) for double filtering the filtered IF signal.

3. Signal processing arrangement according to Claim 2, wherein said first analog signal processing means (64, 66, 68) includes a third SAW filter (66) for double filtering the picture component of the filtered analog IF signal.

4. Signal processing arrangement according to one of the Claims 1, 2 or 3, wherein
said digital signal processing means (58, 60, 76, 78) is able to determine whether the filtered IF signal includes analog or digital content, and blocking the filtered IF signal from passing there through, upon determining the filtered IF signal includes analog content, and
said first and second analog signal processing means (64, 66, 68, 70, 72) being able to determine whether the filtered IF signal includes analog or digital content, and blocking the filtered IF signal from passing there through, upon determining said filtered IF signal includes digital content.

5. Signal processing arrangement according to one of the Claims 1 to 4, wherein said digital signal processing means includes a cascade connection of said first digital SAW (52), a postamplifier (54), a buffer amplifier (56), a second SAW filter (58) and a second converter (60).

6. Signal processing arrangement according to Claim 5, wherein said first analog signal processing means (64, 66, 68) includes a first buffer amplifier (64) having an input connected to said output of said postamplifier (54), an analog SAW (66) and an analog IF processor (68) for producing a composite video signal to be provided to a display means.

7. Signal processing arrangement according to Claim 6, wherein said second analog signal processing means (70, 72, 68) includes a second buffer amplifier (70) connected to receive an analog sound signal from said signal source (42) and an analog sound SAW (72) for filtering said analog sound signal and providing the filtered analog sound signal to said analog IF processor (68).

8. Method of filtering IF signals including one of analog and digital content, the method comprising the steps:
receiving an IF signal from a tuner (42);
filtering said IF signal in a first SAW filter (52) and providing the filtered IF signal to both a digital IF circuit (62) and an analog IF circuit (75); **characterized by** the step:
providing the IF signal received by said tuner (42) directly to a sound SAW filter (72) for processing only the sound component of an analog IF signal in case of an analog IF signal, bypassing therefore the first SAW filter (52).

9. The method of Claim 8, wherein the first SAW filter (52) is used only for filtering the picture component of said analog IF signal, in the case that an analog signal is received.

## Patentansprüche

1. Signalverarbeitungsanordnung mit:
einer Signalquelle (42) zur Lieferung eines digitalen oder analogen ZF-Signals,
einem ersten SAW-Filter (52), das mit der Signalquelle (42) verbunden ist und einen Ausgang zur Filterung der ZF-Signale aufweist,
mit dem Ausgang verbundenen digitalen Signalverarbeitungsmitteln (58, 60,76,78) zur Verarbeitung eines gefilterten digitalen ZF-Signals,
**gekennzeichnet durch**
mit dem Ausgang verbundene erste analoge Signalverarbeitungsmittel (64, 66, 68) zur Verarbeitung nur der Bildkomponente eines analogen ZF-Signals und
mit der Signalquelle (42) verbundene zweite analoge Signalverarbeitungsmittel (70, 72, 68) zur Verarbeitung nur der Tonkomponente des analogen ZF-Signals, wobei somit das erste SAW-Filter (52) umgangen wird.

2. Signalverarbeitungsanordnung nach Anspruch 1, wobei die digitalen Signalverarbeitungsmittel (58, 60, 76, 78) ein zweites SAW-Filter (58) für eine doppelte Filterung des gefilterten ZF-Signals enthalten.

3. Signalverarbeitungsanordnung nach Anspruch 2, wobei die ersten analogen Signalverarbeitungsmittel (64, 66, 68) ein drittes SAW-Filter (66) zur doppelten Filterung der Bildkomponente des gefilterten analogen ZF-Signals enthalten.

4. Signalverarbeitungsanordnung nach einem der Ansprüche 1, 2 oder 3, wobei
die digitalen Signalverarbeitungsmittel (58, 60, 76, 78) ermitteln können, ob das gefilterte ZF-Signal einen analogen oder digitalen Inhalt aufweist, und eine Sperrung des gefilterten ZF-Signals gegenüber der Weiterleitung aufgrund der Ermittlung, dass das gefilterte ZF-Signal einen analogen Inhalt enthält, bewirken, und
die ersten und die zweiten analogen Signalverarbeitungsmittel (64, 66, 68, 70, 72) ermitteln können, ob das gefilterte ZF-Signal einen analogen oder einen digitalen Inhalt enthält, und eine Sperrung des gefilterten ZF-Signals gegenüber einer Weiterleitung dadurch aufgrund der Ermittlung bewirken, dass das gefilterte ZF-Signal einen digitalen Inhalt enthält.

5. Signalverarbeitungsanordnung nach einem der Ansprüche 1 bis 4, wobei die digitalen Signalverarbeitungsmittel eine Kaskadenschaltung des ersten digitalen SAW-Filters (52), eines Nachverstärkers (54), eines Pufferverstärkers (56), eines zweiten SAW-Filters (58) und eines zweiten Converters (60) enthalten.

6. Signalverarbeitungsanordnung nach Anspruch 5, wobei die ersten analogen Signalverarbeitungsmittel (64, 66, 68) einen ersten Pufferverstärker (64) mit einem mit dem Ausgang des Nachverstärkers (54) verbundenen Eingang, und ein analoges SAW-Filter (66) und einen analogen ZF-Prozessor (68) für die Erzeugung eines zusammengesetzten Videosignals für ein Wiedergabemittel enthalten.

7. Signalverarbeitungsanordnung nach Anspruch 6, wobei die zweiten analogen Signalverarbeitungsmittel (70, 72, 68) einen zweiten Pufferverstärker (70) enthalten zum Empfang eines analogen Tonsignals von der Signalquelle (42) und ein analoges Ton-SAW-Filter (72) zur Filterung des analogen Tonsignals und zur Lieferung des gefilterten analogen Tonsignals zu dem analogen ZF-Prozessor (68).

8. Verfahren zur Filterung von ZF-Signalen mit einem analogen oder einem digitalen Inhalt mit folgenden Schritten:
Empfang eines ZF-Signals von einem Tuner (42),
Filterung des ZF-Signals in einem ersten SAW-Filter (52) und Lieferung des gefilterten ZF-Signals zu einer digitalen ZF-Schaltung (62) und einer analogen ZF-Schaltung (75), **gekennzeichnet durch folgende Schritte:**
Lieferung des **durch** den Tuner (42) empfangenen ZF-Signals direkt zu einem Ton-SAW-Filter (72) zur Verarbeitung nur der Tonkomponente des analogen ZF-Signals im Fall eines analogen ZF-Signals und **dadurch** Umgehung des ersten SAW-Filters (52).

9. Verfahren nach Anspruch 8, wobei das erste SAW-Filter (52) nur für die Filterung der Bildkomponente des analogen ZF-Signals in dem Fall dient, dass ein analoges Signal empfangen wird.

## Revendications

1. Agencement de traitement de signaux comprenant :
une source de signaux (42) pour fournir l'un des signaux FI numériques et analogiques ;
un premier filtre SAW (52) couplé à ladite source de signaux (42) et ayant une sortie pour filtrer lesdits signaux FI ;
des moyens de traitement de signaux numériques (58, 60, 76, 78)
couplés à ladite sortie pour traiter un signal FI numérique filtré ; **caractérisé par**
des premiers moyens de traitement de signaux analogiques (64, 66, 68)
couplés à ladite sortie pour traiter uniquement la composante vidéo d'un signal FI analogique, et
des seconds moyens de traitement de signaux analogiques (70, 72, 68) couplés à ladite source de signaux (42) pour traiter uniquement la composante audio d'un signal FI analogique, en dérivant ainsi le premier filtre SAW (52).

2. Agencement de traitement de signaux selon la revendication 1, où lesdits moyens de traitement de signaux numériques (58, 60, 76, 78) comprennent un second filtre SAW (58) pour filtrer deux fois le signal FI filtré.

3. Agencement de traitement de signaux selon la revendication 2, où lesdits premiers moyens de traitement de signaux analogiques (64, 66, 68) comprennent un troisième filtre SAW (66) pour filtrer deux fois la composante vidéo du signal FI analogique filtré.

4. Agencement de traitement de signaux selon l'une des revendications 1, 2 ou 3, où
lesdits moyens de traitement de signaux numériques (58, 60, 76, 78) sont capables de définir si le signal FI filtré comprend un contenu analogique ou numérique, et d'empêcher le signal FI filtré de passer, s'il a été défini que le signal FI filtré comprend un contenu analogique, et
lesdits premiers et seconds moyens de traitement de signaux analogiques (64, 66, 68, 70, 72) étant capables de définir si le signal FI filtré comprend un contenu analogique ou numérique, et d'empêcher le signal FI filtré de passer, s'il a été défini que le signal FI filtré comprend un contenu numérique.

5. Agencement de traitement de signaux selon l'une des revendications 1 à 4, où lesdits moyens de traitement de signaux numériques comprennent un montage en cascade dudit premier SAW numérique (52), d'un postamplificateur (54), d'un amplificateur séparateur (56), d'un second filtre SAW (58) et d'un second convertisseur (60).

6. Agencement de traitement de signaux selon la revendication 5, où lesdits premiers moyens de traitement de signaux analogiques (64, 66, 68) comprennent un premier amplificateur séparateur (64) ayant une entrée connectée à ladite sortie dudit postamplificateur (54), un SAW analogique (66) et un processeur FI analogique (68) pour produire un signal vidéo composite à fournir à un moyen d'affichage.

7. Agencement de traitement de signaux selon la revendication 6, où lesdits seconds moyens de traitement de signaux analogiques (70, 72, 68) comprennent un second amplificateur séparateur (70) connecté pour recevoir un signal audio analogique de ladite source de signaux (42) et un SAW audio analogique (72) pour filtrer ledit signal audio analogique et fournir le signal audio analogique filtré audit processeur FI analogique (68).

8. Procédé de filtrage des signaux FI comprenant l'un du contenu analogique et numérique, la méthode comprenant les étapes :
de réception d'un signal FI d'un syntoniseur (42) ;
de filtrage dudit signal FI dans un premier filtre SAW (52) et de fourniture du signal FI filtré à la fois à un circuit FI numérique (62) et à un circuit FI analogique (75) ; **caractérisé par l'étape** :
de fourniture du signal FI reçu par ledit syntoniseur (42) directement à un filtre SAW audio (72) pour traiter uniquement la composante audio d'un signal FI analogique dans le cas d'un signal FI analogique, en dérivant ainsi le premier filtre SAW (52).

9. Le procédé de la revendication 8, où le premier filtre SAW (52) est utilisé uniquement pour filtrer la composante vidéo dudit signal FI analogique, dans le cas où un signal analogique est reçu.
